## Europäisches Patentamt

## European Patent Office

## Office européen des brevets

(11) Veröffentlichungsnummer: **0 242 521**
**B1**

# EUROPÄISCHE PATENTSCHRIFT

(45) Veröffentlichungstag der Patentschrift:
**26.10.88**

(51) Int. Cl.⁴: **F 16 H 19/04**, B 25 J 17/00

(21) Anmeldenummer: **87102117.6**

(22) Anmeldetag: **14.02.87**

(54) **Antriebseinrichtung für einen insbesondere zur Aufnahme des Greifwerkzeuges eines Roboters geeigneten Abtriebsflansch.**

(30) Priorität: **21.02.86 DE 3605616**
**24.07.86 DE 3624974**

(43) Veröffentlichungstag der Anmeldung:
**28.10.87 Patentblatt 87/44**

(45) Bekanntmachung des Hinweises auf die Patenterteilung:
**26.10.88 Patentblatt 88/43**

(84) Benannte Vertragsstaaten:
**AT CH DE FR GB IT LI SE**

(56) Entgegenhaltungen:
**DD - A - 150 570**
**DD - A - 214 513**
**DD - A - 222 534**
**DE - A - 2 107 378**
**DE - A - 2 537 800**
**FR - A - 2 558 761**
**US - A - 4 547 121**
**US - A - 4 559 843**

(73) Patentinhaber: **Wittenstein, Manfred, Dipl.-Ing.,
Bismarckstrasse 19, D-6991 Igersheim (DE)**

(72) Erfinder: **Wittenstein, Manfred, Dipl.-Ing.,
Bismarckstrasse 19, D-6991 Igersheim (DE)**
Erfinder: **Orlowski, Bernhard, Dipl.-Ing., Feuerbacher
Talstrasse 121, D-7000 Stuttgart 30 (DE)**

(74) Vertreter: **Pfusch, Volker, Dipl.-Ing., Dinkelsbühler
Strasse 12F, D-7000 Stuttgart 50 (DE)**

Beschreibung

Die Erfindung betrifft eine Antriebseinrichtung nach dem Oberbegriff des Anspruchs 1, wie sie auf diesem Gebiet allgemein üblich ist.

Derartige Antriebseinrichtungen sind insbesondere bei Portal-Robotern üblich. Denn gerade bei diesen Robotern müssen die Antriebsmotoren des in einem Trägerkopf, der sogenannten Roboterhandachse, gelagerten Abtriebsflansches zur Erzielung einer möglichst kleinen Baugrösse des Trägerkopfes relativ weit von diesem Trägerkopf entfernt am oberen Ende des Portals untergebracht sein. Die kompakte Bauweise ist erforderlich, um für das an dem Trägerkopf angelenkte Greifwerkzeug, die sogenannte Roboterfaust, eine auch bei kleinem Manövrierraum noch freie Beweglichkeit zu gewährleisten.

Bei den bekannten Ausführungen solcher Roboter-Handachsen-Antriebe werden die Kräfte zur Verdrehung des Trägerkopfes einerseits und der Abtriebswelle andererseits von entfernt auf einer gegenüber den genannten Drehbewegungen ortsfesten Haltevorrichtung liegenden Antrieben über konzentrisch ineinander liegende Wellen übertragen, wobei zumindest die Kraftumlenkung in die zur Trägerkopfachse B geneigte Achse A der Abtriebswelle über Kegelzahnräder erfolgt.

Die Verwendung von Kegelzahnrädern erfordert allerdings grundsätzlich eine untereinander verknüpfte Steuerung der Antriebe, da die beiden Drehbewegungen nicht unabhängig voneinander erzeugbar sind. Dadurch ist stets eine Nachregelung für das Teil (Trägerkopf oder Abtriebswelle) erforderlich, dessen Lage gerade nicht verändert werden soll. Die hierzu notwendige Steuerungsverknüpfung lässt sich in der Regel nur durch EDV-Anwendung (NC-Steuerung) erreichen und ist damit kostenaufwendig.

Im übrigen lässt sich das Erfordernis einer möglichst spielfreien Kraftübertragung bei Kegelzahnradgetrieben nicht einfach und vor allem nicht ohne Inkaufnahme anderer Nachteile erfüllen.

Bei der Übertragung von Drehmomenten neigen lange Wellen ferner leicht zu Torsion bzw. Torsionsschwingungen. Selbstverständlich lässt sich das Torsionsverhalten von Wellen durch eine stabile torsionssteife Gestaltung der Wellen positiv beeinflussen. Der Nachteil besteht jedoch in einem daraus resultierenden hohen Gewicht der so verstärkten Teile. Eine andere Abhilfemassnahme besteht darin, das zu übertragende Drehmoment in der von dem Antriebsmotor ausgehenden an die Abtriebswelle führenden Welle durch an den Antriebsort der Abtriebswelle verlegte Drehmomentuntersetzung gering zu halten. Dies bedingt aber wiederum im Durchmesser grosse und damit das Bauvolumen des Trägerkopfes unerwünscht erhöhende Kegelzahnräder auf der Abtriebswelle.

Kegelzahnräder haben in bezug auf die Einhaltung einer hohen Spielgenauigkeit weiterhin den Nachteil, dass sie bei sich einstellender Abnutzung nicht einfach zu Erreichung einer Spielverringerung nachstellbar sind. Auch lassen die Zahnflanken von Kegelzahnrädern sich mit wirtschaftlich vertretbarem Aufwand in der Regel nicht gehärtet bearbeiten, wodurch sie noch relativ schnell verschleissen.

Hiervon ausgehend liegt der Erfindung die Aufgabe zugrunde, eine gattungsgemässe Antriebseinrichtung zu schaffen, mit der bei geringer Baugrösse des Trägerkopfes sowie einfacher Gestaltung der Antriebs- und Kraftübertragungsmittel eine hohe Spielgenauigkeit innerhalb der zur Kraftübertragung erforderlichen Getriebeteile erzielbar ist. Die Spielgenauigkeit soll darüber hinaus auch während des Roboterbetriebes noch laufend ohne erforderliche Demontagearbeiten auf einfache Weise nachjustierbar sein. Ausserdem soll der Trägerkopf so ausgestaltet sein, dass zu dem Greifwerkzeug an den Abtriebsflansch führende elektrische, hydraulische oder pneumatische Versorgungsleitungen von der gegenüber den Drehbewegungen des Trägerkopfes und der Abtriebswelle ortsfesten Haltevorrichtung durch den Trägerkopf hindurch geführt werden können. Dadurch lassen sich diese Versorgungsleitungen gut gegen Beschädigungen durch Ausseneinflüsse schützen.

Gelöst wird diese Aufgabe durch eine Ausbildung der Antriebseinrichtung nach den kennzeichnenden Merkmalen des Anspruchs 1.

Besonders zweckmässig ist es, die Zahnstange in Richtung der Achse B verschiebbar zu lagern.

Ein wichtiger Vorteil bei der Übertragung der Antriebskraft durch eine Zahnstange und ein Ritzel besteht darin, dass an beiden Teilen eine leicht und äusserst genau herstellbare Geradverzahnung realisierbar ist. Vor allem bereitet es keine Schwierigkeiten, gehärtete Zahnflanken zu bearbeiten.

Ferner kann die auf die Abtriebswelle zu übertragende Antriebskraft geradlinig in Achsrichtung der von dem Antriebsmotor ausgehenden Welle übertragen werden, wodurch festigkeitsmässig geringe Wellendurchmesser ausreichen.

Die Verwendung einer Zahnstange bei der Einleitung der Antriebskraft auf die Abtriebswelle erlaubt zudem eine Nachjustierbarkeit einer sich im Betrieb durch Abnutzung einstellenden Spielvergrösserung. Das erforderliche Mittel hierzu gibt der Anspruch 3 an.

Mit dem Antriebsmotor für die Abtriebswelle ist die Zahnstange bei einer vorteilhaften Ausgestaltung entsprechend Anspruch 4 dadurch verbunden, dass sie drehbar in einem an dem Antriebsmotor angreifenden Stössel gelagert ist. Bei dieser Ausführung sind die Antriebe für die Drehbewegung des Trägerkopfes einerseits und der Abtriebswelle andererseits vollständig entkoppelt, d.h. die beiden Teile können ohne gegenseitige Beeinflussung getrennt voneinander verstellt werden. Die axiale Verstellung des Stössels kann über einen Antriebsmotor erfolgen, der die Antriebskraft über ein Ritzel auf eine zahnstangenförmige Ausbildung des freien Endes des Stössels überträgt. Es ist aber auch die Verwendung eines translatorisch arbeitenden Motors, wie z.B. eines Hydraulikmotors, möglich.

Bei der Ausgestaltung nach Anspruch 5 ist eine Entkopplung der Antriebsmotoren nicht gegeben.

Aber die gute Bearbeitbarkeit sowie Nachjustierbarkeit des Ritzel-Zahnstangen-Eingriffes ist auch bei dieser Ausführungsform in gleicher Weise möglich.

Das Spiel zwischen Spindel und Gegenprofil der Zahnstange wird durch die Massnahme nach Anspruch 7 bleibend gering gehalten.

Durch den Kugelrollspindelantrieb bleiben die Reibung und der Verschleiss bei der Kraftübertragung gering.

Die Massnahmen nach Anspruch 8 und 9 ermöglichen eine störungsunanfällige Verlegung der zu dem Greifwerkzeug (Roboterfaust) führenden Versorgungsleitungen.

Der Anspruch 10 beschreibt eine vorteilhafte Ausführung des Justierlagers nach Anspruch 3. Die Verschiebbarkeit des Lagers nach Anspruch 11 ist ein zweckmässiges Hilfsmittel, die Zahnstange an das Abtriebswellen-Ritzel heranzuführen, wodurch eine Ein- bzw. Verstellung des betreffenden Zahnflankenspiels erreichbar ist.

Besonders einfach lässt sich diese Spielverstellung bei den Ausbildungen der die Zahnstange führenden Lager und deren Halterung nach den Ansprüchen 12 bis 16 erzielen.

Anspruch 17 enthält eine besonders zweckmässige Ausgestaltung der Ausführungsform nach Anspruch 4, bei der der die in dem Ritzel der Abtriebswelle kämmende Zahnstange verschiebende Antriebs-Stössel direkt in der Zahnstange drehbar gelagert ist.

Nach Anspruch 18 befindet sich der Spindelabschnitt, über den der Stössel angetrieben wird, am besten an dem der Zahnstange abgewandten Ende des Stössels. Der Antrieb des Stössels erfolgt dabei durch eine Spindelmutter. Der Vorteil eines solchen Spindelmutter-Antriebs besteht insbesondere darin, ohne Einschaltung eines Getriebes einen schnellaufenden, wirtschaftlichen Elektromotor einsetzen zu können.

Indem die Spindelmutter den Stössel in dessen der Zahnstange abgewandten Endbereich antreibt, beeinträchtigt der dazwischen liegende Bereich des Stössels die in Richtung des Stössels zur Verstellung des Trägerkopfes um die Achse B zu verlegenden Antriebsmittel in geringst möglicher Weise.

Zur Verdrehung des Trägerkopfes um die Achse B ist die Ausbildung der Kraftübertragungsmittel nach Anspruch 19 besonders zweckmässig. Die den Stössel umgreifende Hohlwelle stellt ein raum- und gewichtssparendes verdrehsteifes Kraftübertragungsmittel dar. Durch die Verwendung einer an den beiden Enden jeweils mit einem Antriebs- bzw. Abtriebsstirnzahnrad versehenen parallel zum Stössel verlaufenden Zwischenwelle ist das Spiel der zwischen Antriebsmotor und Trägerkopf zur Kraftübertragung vorzusehenden Zahnradpaarungen nachjustierbar. Zu dem letztgenannten Zweck ist z.B. die Zwischenwelle nach den Merkmalen des Anspruchs 20 gelagert. Durch eine solche Lagerung in exzentrisch verdrehbaren Ringen kann der Achsabstand der jeweils ineinander greifenden Zahnräder variiert werden. Auf diese Weise lassen sich verschleissbedingte Spielvergrösserungen bei den Zahnrädern korrigieren.

Voraussetzung ist allerdings jeweils der Einsatz von Stirnrädern mit ballig geformten Zahnflanken. Durch die in Anspruch 23 vorgesehene Anordnung und Anlenkung der Antriebe zum einen äusserst raumsparend in der Haltevorrichtung untergebracht und zum anderen vor allem auch leicht mon- und demontiert werden.

Die Ansprüche 24 bis 27 geben Ausführungsformen wieder, nach denen bestimmte Verdrehwinkel der Abtriebswelle in Achse A und des Trägerkopfes in Achse B in bezug auf die Haltevorrichtung mit möglichst einfachen Mitteln fest einstellbar sind. Eine nach der Erfindung gegebene Grundvoraussetzung für eine feste Einstellbarkeit des Verstellweges durch Endschalter besteht in mechanisch entkoppelten Antrieben für die Verdrehbewegungen um die beiden Achsen A und B, so dass diese Einstellvorrichtungen bei einer Antriebseinrichtung nach den Ansprüchen 5 bis 7 nicht anwendbar ist.

Ausführungsbeispiele sind in der Zeichnung dargestellt und werden nachfolgend näher beschrieben.

Es zeigen:

Fig. 1 eine schematische Darstellung eines Portal-Roboters mit einer Antriebseinrichtung nach der Ausführung in Fig. 2 und 3

Fig. 2 eine erste Ausführung einer Antriebseinrichtung mit frei drehbar gelagerter Zahnstange in einem Längsschnitt II-II in Fig. 3

Fig. 3 eine Ansicht der Antriebseinrichtung nach Fig. 2 teilweise im Schnitt nach Linie III-III und mit im unteren Bereich teilweise aufgebrochenem Gehäuse

Fig. 4 einen Längsschnitt durch eine alternative Ausführungsform der Antriebseinrichtung mit einer an einen Kugelrollspindelantrieb angelenkten Zahnstange

Fig. 5 eine Ansicht der Ausführungsform der Antriebseinrichtung nach Fig. 4 teilweise im Schnitt nach Linie V-V und mit im unteren Bereich aufgebrochenem Gehäuse

Fig. 6 eine Ansicht einer zweiten Ausführungsform der Antriebseinrichtung mit frei drehbar gelagerter Zahnstange in grösstenteils schematischer Darstellung

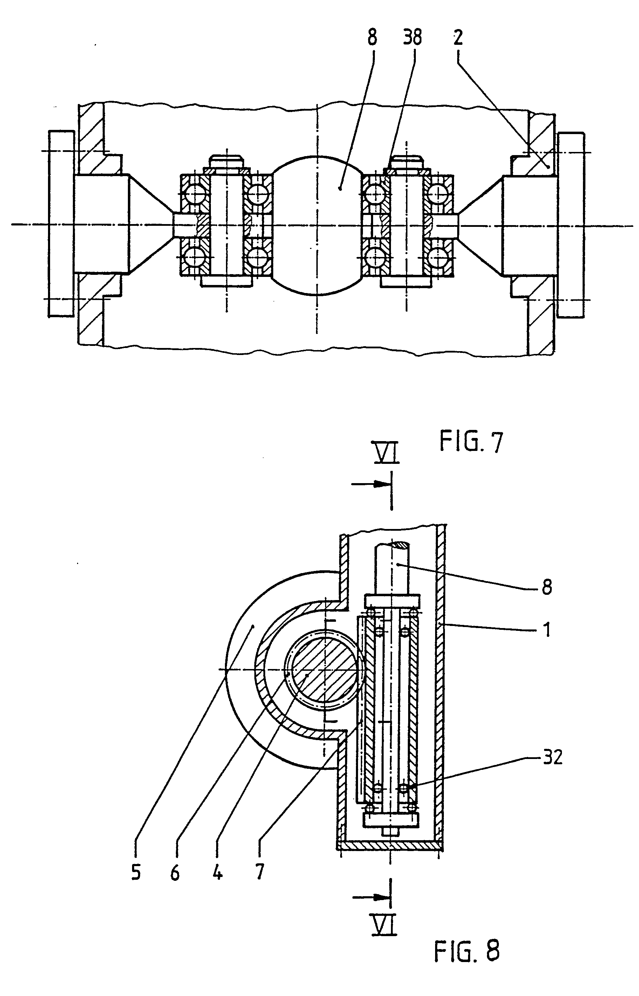

Fig. 7 einen um 90° versetzt dargestellten Schnitt durch den Stössel der Antriebseinrichtung nach Linie VII-VII in Fig. 6, in dem nur der Stössel und seine dortigen in der Haltevorrichtung gelagerten Führungselemente gezeigt sind,

Fig. 8 einen Ausschnitt eines Schnitts durch den Trägerkopf nach Linie VIII-VIII in Fig. 6

Fig. 9 einen Ausschnitt eines Schnitts durch den Trägerkopf nach Linie IX-IX in Fig. 6

Fig. 10 eine Vergrösserung des Ausschnitts X in Fig. 6

Fig. 11 eine Vergrösserung des Ausschnitts XI in Fig. 6

Fig. 12 einen Ausschnitt eines Schnitts nach Linie XII-XII in Fig. 11

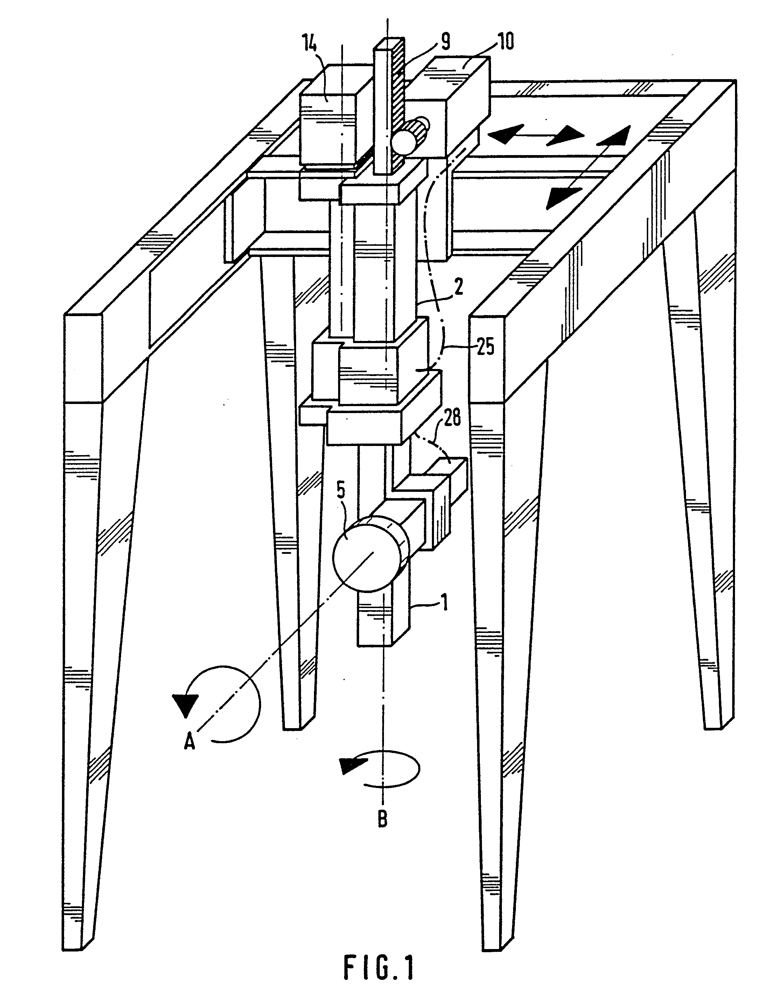

Bei einem Portal-Roboter nach Fig. 1 ist ein Trägerkopf 1 (Handachse) über eine Haltevorrichtung 2 an einem Kreuzschlitten verschiebbar angeordnet und über Lager 3 drehbar um eine Achse B gelagert. Um eine senkrecht zu der Achse B verlaufende Achse A ist ein mit einer über Lager 13 in dem Trägerkopf 1 geführten Abtriebswelle 4 fest verbundener Abtriebsflansch 5 drehbar. Auf der Abtriebswelle 4 ist im Kreuzungsbereich der Achsen A und B ein Ritzel 6 fixiert, das in die Flanken einer in Richtung der Achse B ausgerichteten Zahnstange 7 eingreift.

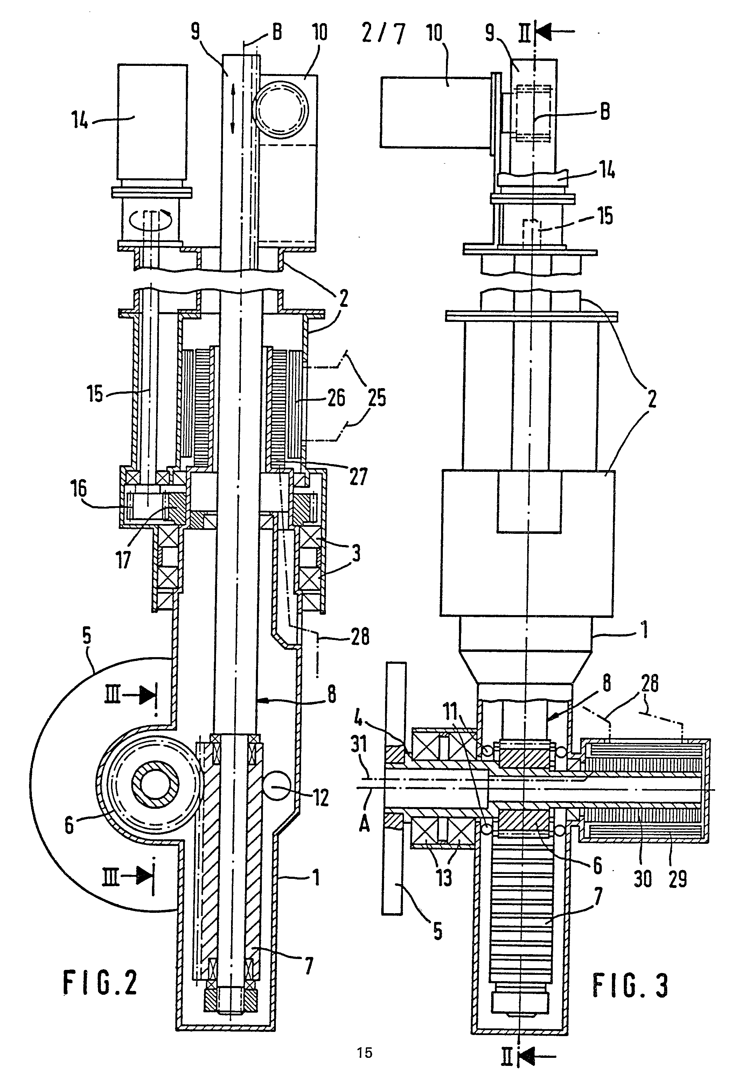

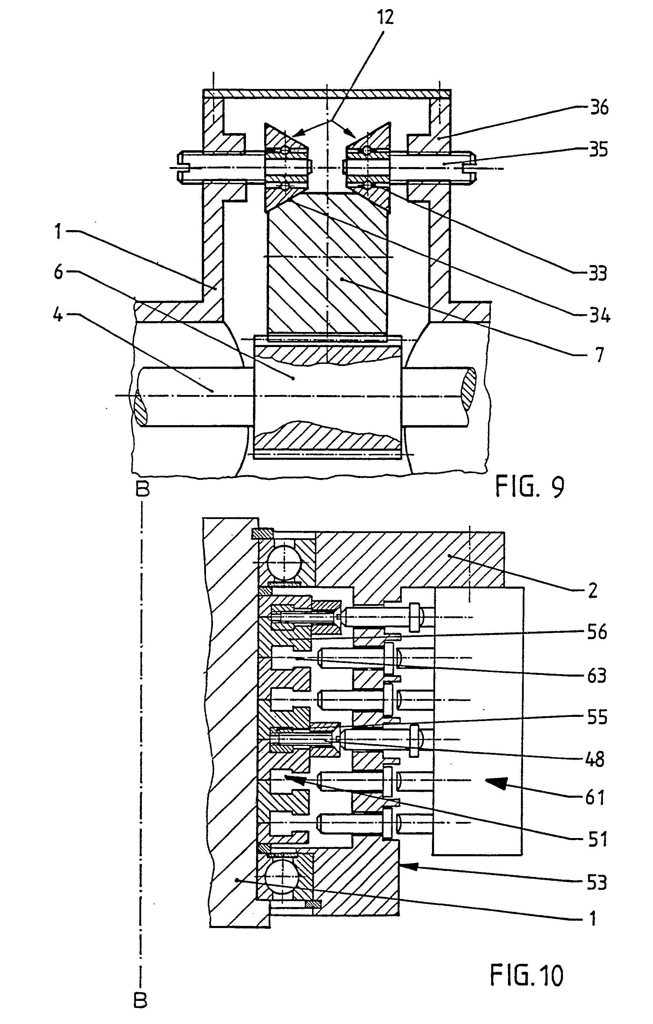

Bei der Ausführung der Antriebseinrichtung nach den Fig. 2 und 3 umgreift die Zahnstange 7 einen Stössel 8, an dessen einem Ende sie drehbar um dessen Achse gelagert ist. An seinem anderen als Zahnstange 9 ausgebildeten Ende greift der Stössel 8 an einen mit der Haltevorrichtung 2 fest verbundenen Antriebsmotor 10 an, der den Stössel in Richtung der Achse B verschieben kann. Gelagert ist die Zahnstange in Richtung der Achse A in Lagern 11, die längs der Achse B ober- und unterhalb der Achse A angeordnet sind und zur Seitenführung der Zahnstange 7 dienen. In der senkrecht zu dieser Seitenführung liegenden Ebene erfolgt die Führung durch ein parallel zur Achse A vorgesehenes Justierlager Führungslager 12, das in Richtung auf die Achse A hin verschiebbar ist. Bei der Ausführung nach Fig. 9 ist das Justierlager 12 so ausgebildet, dass die in Richtung der Achse A wirkenden Lager 11 entfallen können. Hierzu besitzt das Justierlager 12 zwei Wälzlager 33, deren Achsen parallel zur Achse A und auf deren Höhe in bezug auf die Achse B liegen. Die Aussenringe dieser Wälzlager 33 sind konisch ausgebildet, damit die Zahnstange 7, die mit zwei schräg zueinander verlaufenden Führungsbahnen 34 versehen ist, zwischen diesen konischen Aussenringen der Wälzlager 33 geführt werden kann. Die Wälzlager tragenden Lagerzapfen 35 sind an den von den Wälzlagern abgewandten Enden als in Konsolen 36 des Trägerkopfes 1 eingreifende Gewindebolzen ausgebildet. Über diese Gewindebolzen sind die Lagerzapfen 35 zusammen mit den darauf axial fixierten Wälzlagern 33 axial verschiebbar. Dabei weisen die Gewindebolzen Mitnehmer auf, die z.B. ein Innensechskant sein können, an denen diese von ausserhalb des Trägerkopfes 1 leicht verstellt werden können. Durch die Längsverschiebbarkeit der Wälzlager 33 lässt sich das Zahnflankenspiel zwischen Zahnstange 7 und Ritzel 6 einfach justieren. Die schräge Anordnung der Führungsbahnen 34 sorgt dafür, dass die Zahnstange 7 durch die Wälzlager 33 auch einwandfrei verdrehgesichert längs geführt werden kann.

Die Drehung des Trägerkopfes 1 um die Achse B bewirkt ein auf der Haltevorrichtung fest montierter Antriebsmotor 14, dessen Antriebskraft über eine ebenfalls in der Haltevorrichtung 2 geführte Antriebswelle 15 und ein damit fest verbundenes Zahnrad 16 auf ein an dem Trägerkopf 1 fixiertes Zahnrad 17 übertragen wird. An den Zahnrädern 16, 17 erfolgt eine Untersetzung bezüglich des von dem Antriebsmotor 14 ausgehenden Antriebsdrehmomentes.

Die Drehung des Abtriebsflansches 5 wird bei dieser Ausführungsart durch rein translatorische Übertragung der von dem Antriebsmotor 10 ausgehenden Kraft auf die Abtriebswelle 4 erreicht. Dadurch kann die für die Drehung des Abtriebsflansches 5 erforderliche Antriebskraft drehmomentfrei an die Abtriebswelle 4 herangeführt werden. Dies bedeutet wiederum, dass die sich in Richtung der Achse B über einen relativ engen Weg erstreckenden Kraftübertragungsmittel bei der Forderung nach hoher Stellgenauigkeit kompakter ausgebildet werden können als solche, bei denen Drehmomente übertragen werden müssen; denn zur Drehmomentübertragung sind verwindungssteife und damit grosse Querschnitte aufweisende Übertragungsmittel für spielarme Verstellung erforderlich.

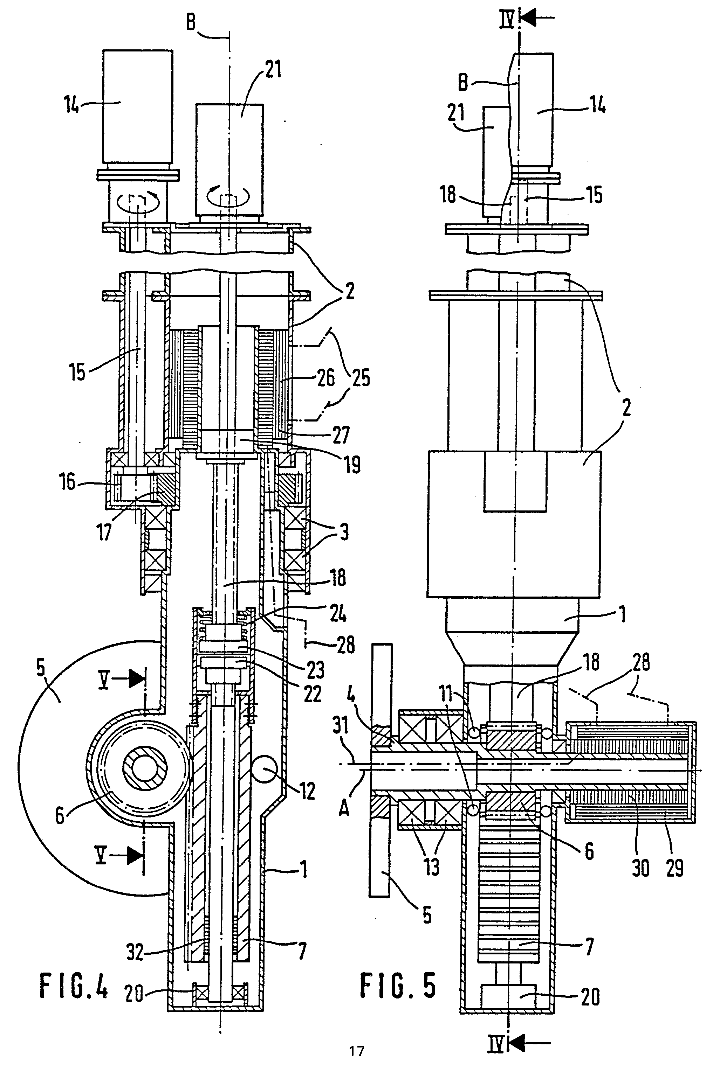

Bei der Ausführung der Antriebseinrichtung nach den Fig. 4 und 5 ist die Zahnstange 7 an einen Kugelrollspindelantrieb angelenkt. Dabei greift eine in der Achse B ausgerichtete Drehspindel 18 in die Zahnstange 7 ein. Diese Drehspindel 18 ist in dem Trägerkopf 1 in Lagern 19 und 20 gelagert und wird von einem Antriebsmotor 21 angetrieben. Die zur Verschiebung der Zahnstange erforderliche Kraft wird von der Drehspindel 18 über eine fest mit der Zahnstange 7 verbundene Spindelmutter 22 übertragen. An dem von der Spindelmutter 22 entfernten Ende der Zahnstange 7 stützt sich die Zahnstange 7 über ein Radiallager 32 an der Drehspindel 18 ab. Um eine Beeinflussung der Positioniergenauigkeit beim Verdrehen des Abtriebsflansches 5 durch Spielungenauigkeiten bei der Kraftübertragung von der Drehspindel 18 über die Spindelmutter 22 auf die Zahnstange 7 auszuschliessen, greift noch eine zweite Spindelmutter 23 an der Drehspindel 18 an, die mit der ersten Spindelmutter 22 über eine lediglich in Richtung der B-Achse wirkende Feder 24 verbunden ist. Die Drehspindel 18 ist zusammen mit den beiden Spindelmuttern 22, 23 in an sich bekannter Weise nach dem Kugelrollspindelprinzip ausgebildet, d.h. die Kraftübertragung zwischen Drehspindel 18 und Spindelmutter 22, 23 erfolgt über zwischen diesen gelagerte Kugeln. Diese Kugeln sorgen für einen reibungsarmen Kraftübertritt.

Die über die Feder 24 erzielte kraftschlüssige Verbindung der beiden Spindelmuttern 22, 23 bewirkt, dass zumindest bei Beginn und Ende eines durch Verschieben der Zahnstange 7 bewirkten Positioniervorganges die Kugeln der ersten Spindelmutter 22 stets an der gleichen Gangflanke der Drehspindel 18 anliegen. Zu diesem Zweck muss die Federkraft der Feder 24 mindestens so gross ausgelegt sein, dass diese geforderte Lage der ersten Spindelmutter 22 zumindest bei Beginn und Ende der Positionierung des Abtriebsflansches 5 um die A-Achse gewährleistet ist.

Da bei der Ausführung der Antriebseinrichtung nach den zuletzt beschriebenen Fig. 4 und 5 die Antriebe für die Drehbewegungen um die Achsen A und B nicht entkoppelt sind, müssen diese an eine NC-Steuerung angeschlossen sein, um Positionierungen in einer der beiden Achsen A und B in der betreffenden anderen Achse entgegenzusteuern. Der Antrieb der Zahnstange 7 über eine Rollspindel hat gegenüber dem Stössel-Antrieb, bei dem die Positionierungen um die beiden Achsen A und B entkoppelt ist, den Vorteil einer reibungsärmeren und spielgenaueren Kraftübertragung.

Das bei den beschriebenen Portal-Robotern an dem Abtriebsflansch 5 des als Roboter-Handachse dienenden Trägerkopfes 1 anzubringende nicht dargestellte Greifwerkzeug wird üblicherweise als Roboter-Faust bezeichnet.

Energieübertragende Medien, wie beispielsweise elektrischer Strom oder Hydraulikflüssigkeit können bei beiden der vorstehend beschriebenen Ausführungsformen der Antriebseinrichtung wie folgt von der Haltevorrichtung 2 durch den Trägerkopf 1 hindurch an den Abtriebsflansch 5 geführt werden. Versorgungsleitungen 25 werden in einem fest an der Haltevorrichtung 2 koaxial zur Achse B montierten Stator 26 geführt. Ist das eingeführte Medium Strom, so wird dieser über nicht dargestellte Schleifkontakte zu einem fest mit dem Trägerkopf 1 verbundenen Rotor 27 geführt. Aus diesem leiten das energieübertragende Medium Leitungen 28 zu einem weiteren diesmal an dem Trägerkopf 1 koaxial zur Achse A festgelegten Stator 29, der einen auf die Abtriebswelle 4 aufgebrachten Rotor 30 umfasst. Der Medienübertritt von Stator 29 zum Rotor 30 erfolgt wie bei der Stator/Rotor 26/27-Anordnung. Von dem Rotor 30 führen Leitungen 31 durch die Abtriebwelle 4, die als Hohlwelle ausgebildet ist, zu dem Abtriebsflansch 5. Ist das energieführende Medium Hydraulikflüssigkeit, so sind zwischen den Statoren und Rotoren jeweils gegeneinander und nach aussen gedichtete Ringkanäle vorgesehen.

Die Verwendung des erfindungsgemässen Zahnstangenantriebs für die Abtriebswelle 4 erlaubt einen in der Praxis äusserst geschützten Verlauf der in den Abtriebsflansch 5 führenden Energieversorgungsleitungen.

Bei einer besonders günstigen weiteren Ausbildung der Antriebseinrichtung umgreift die Zahnstange 7 das eine Ende eines sich in der Achse B erstreckenden Stössels 8, an dem sie axial fixiert drehbar gelagert ist. Der Stössel 8 ist im Bereich seines anderen Endes als Spindel ausgebildet und dort in einer in der Haltevorrichtung 2 axial fixierten antreibbaren Spindelmutter 37 gelagert. Der Stössel 8 ist durch in der Haltevorrichtung 2 gelagerte Führungsrollen 38 gegen Verdrehen gesichert, indem diese Führungsrollen 38 an parallel gegenüber liegenden Führungsflächen des Stössels 8 angreifen. Die parallel gegenüberliegenden Führungsflächen müssen so gestaltet sein, dass die Führungsrollen 38 ein Verdrehen des Stössels 8 möglichst spielarm sicher vermeiden können. Zu diesem Zweck können die Führungsflächen z.B. eben ausgebildet sein. Die Spindelmutter 37 ist über eine mit einem Elektromotor verbindbare Antriebswelle 49 antreibbar, wobei das Antriebsmoment von einem Kegelritzel auf ein mit der Spindelmutter 37 fest verbundenes Kegelzahnrad übertragen wird. Die Achsen der beiden ineinandergreifenden Zahnräder verlaufen rechtwinklig zueinander. Das Übersetzungsverhältnis zwischen den beiden Zahnrädern ist so festgelegt, dass die Antriebswelle 49 direkt mit der Drehzahl des daran anzuschliessenden Elektromotors angetrieben werden kann.

Die Übertragung des Antriebsmomentes zum Verdrehen des Trägerkopfes 1 um die Achse B erfolgt durch zwei auf parallelen Achsen hintereinander liegende Wellen, die über ein Stirnradpaar miteinander verbunden sind. Von diesen beiden Wellen ist die weiter von dem Trägerkopf 1 entfernt liegende als den Stössel umfassende Hohlwelle 39 ausgebildet und an ihrem von dem Trägerkopf entfernten Ende mit einem Kegelrad versehen. Über dieses Kegelrad wird die Hohlwelle 39 über ein an einer in der Haltevorrichtung 2 gelagerten Antriebswelle 50 befestigtes Gegenkegelrad angetrieben. Die Achsen der Hohlwelle 39 und der Antriebswelle 50 sind rechtwinklig gegeneinander ausgerichtet. Durch ein an dem anderen Ende der Hohlwelle angebrachtes Stirnrad 40 wird das Antriebsmoment auf die zweite als parallele Zwischenwelle 42 ausgebildete Welle über ein mit dieser fest verbundenes Gegenstirnrad 41 übertragen. Ein an dem anderen Ende der Zwischenwelle 42 montiertes Stirnritzel 43 leitet das Antriebsmoment auf ein fest mit dem Trägerkopf 1 verbundenes Stirnrad 44 über.

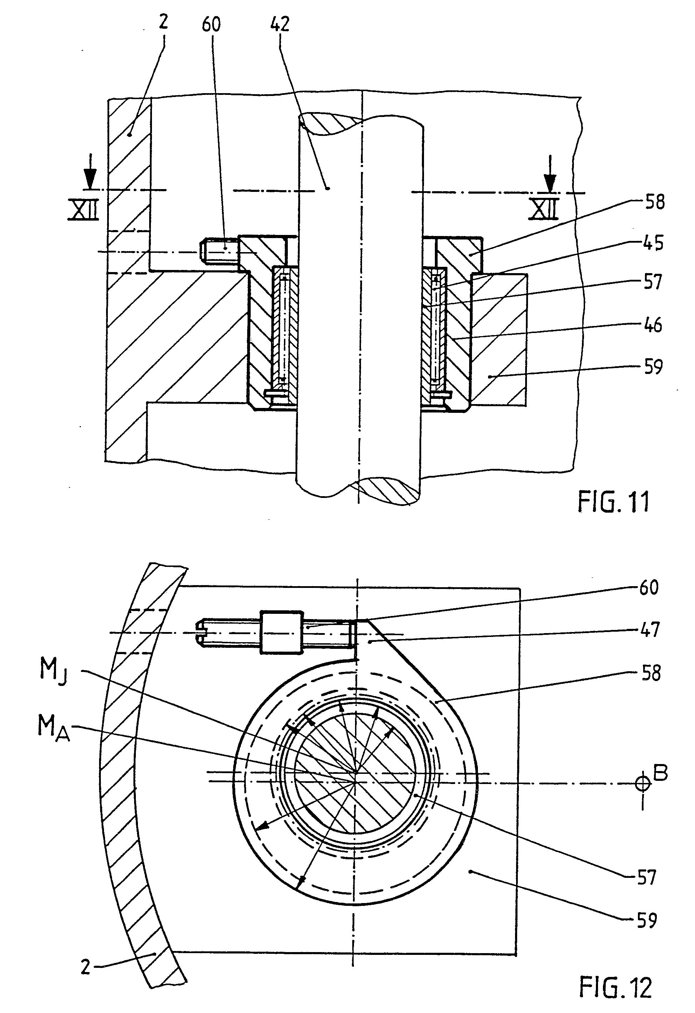

Die Zwischenwelle 42 ist in Wälzlagern 45 so gelagert, dass das Spiel zwischen den Stirnrädern 40 und 41 einerseits und dem Stirnritzel 43 und Stirnrad 44 andererseits in montiertem Zustand durch ein in der Haltevorrichtung 2 geführtes Stellglied verstellbar ist. Die Verstellbarkeit wird dadurch erreicht, dass ein Aussenring 46 der Wälzlager 45 eine gegenüber den Laufflächen des Innenringes exzentrische Aussenumfangsfläche aufweist, mit der er in der zur Aufnahme des Wälzlagers 45 in der Haltevorrichtung 2 vorgesehenen Bohrung einsetzbar ist. In der Fig. 12 ist der Mittelpunkt der Aufnahmebohrung für den Aussenring 46 des Wälzlagers 45 mit $M_A$ und derjenige des Wälzlagerinnenringes 57 und damit zugleich der Zwischenwelle 42 mit $M_I$ bezeichnet. An dem Aussenring 46 jedes Wälzlagers 45 ist jeweils ein radial nach aussen überstehender Bund 58 angeformt. Dieser dient zur axialen Fixierung des Wälzlagers 45 in Lagerböcken 59 der Haltevorrichtung 2. Ausserdem ist an den Bund 58 ein Anschlag 47 angeformt, über den der Aussenring 46 durch ein in der Haltevorrichtung 2 gelagertes Verstellglied, das hier eine Schraube 60 ist, um die Achse $M_A$ verstellt werden kann. Die Schraube 60 ist von ausserhalb der Haltevorrichtung 2 leicht betätigbar. In der in Fig. 12 gezeichneten Ausführung des Wälzlageraussenringes 46 wird die Achse $M_I$ durch weiteres Eindrehen der Schraube 60 auf die Achse B zu bewegt. Auf diese Weise ist das Spiel zwischen den kraftübertragenden Stirnrädern 40, 41; 43, 44 einfach justierbar und zwar an beiden Zahnradpaaren getrennt und unabhängig voneinander. Voraussetzung sind allerdings in Axialrichtung ballige Zahnflanken der betreffenden Stirnräder.

Von der Haltevorrichtung 2 ausgehende elektrische Steuerströme an z. B. ein Greifwerkzeug an dem Abtriebsflansch 5 können wie bei den Ausführungsformen nach den Fig. 2 bis 5 auch hier wiederum ohne Kabelleitungen zwischen den sich relativ zueinander bewegenden Teilen übertragen werden.

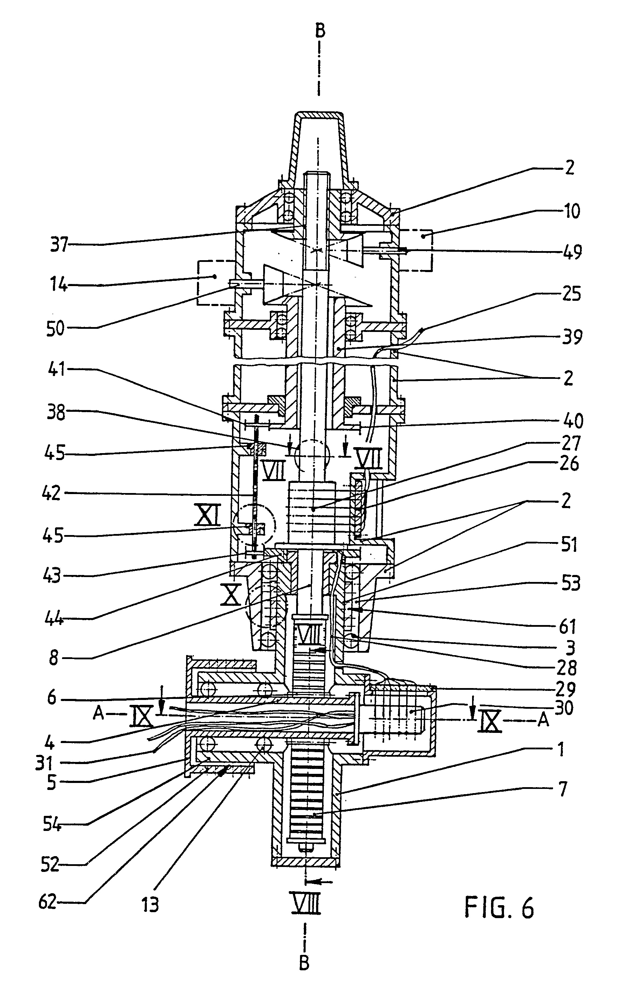

Die Fig. 6 und 10 zeigen, wie zwischen dem Trägerkopf 1 und der Haltevorrichtung 2 einerseits sowie dem Abtriebsflansch 5 und der Haltevorrichtung 2 andererseits jeweils einstellbare Endkontaktschalter 61, 62 angebracht sind, von denen jeweils ein Positionsgeberteil 51, 52 an dem Trägerkopf 1 bzw. dem Abtriebsflansch 5 und jeweils ein Kontaktgeberteil 53, 54 an der Haltevorrichtung 2 bzw. dem Trägerkopf 1 angebracht sind. Die Positionsgeberteile 51, 52 bestehen jeweils aus aneinanderliegenden Doppel-T-Profilringen 56, bei denen die radial innenliegenden T-Balken axial länger sind als die radial aussen liegenden. Dadurch entsteht radial aussen zwischen den Profilringen 56 ein Ringschlitz 63. Zwischen den Profilringen 56 ist jeweils ein Ring 55 drehbar gelagert, der über eine durch den Schlitz 63 ragende als Positionsgeber wirkende in den Ring jeweils einbringbare Schraube 48 umfangsmässig fixierbar ist. Die Schrauben 48 berühren bei Verdrehen der jeweiligen Positionsgeberteile 51, 52 die an der Haltevorrichtung 2 bzw. dem Trägerkopf 1 fest angeordneten Kontaktgeber der entsprechenden Kontaktgeberteile 53, 54 und lösen damit Stop- und Start-Funktionen der Stellantriebe für den Trägerkopf 1 und den Abtriebsflansch 5 aus. Durch das Vorsehen einer Vielzahl von zusammenwirkenden Positions- und Kontaktgebern kann eine entsprechende Vielzahl von exakt steuerbaren Start- und Stopfunktionen ausgelöst werden. Die hohe Genauigkeit der Steuerbarkeit ergibt sich insbesondere daraus, dass die Verstellwegbestimmung in äusserst geringer Nähe des zu bewegenden Objektes erfolgt, wodurch sich Antriebsspiele nur noch in sehr geringem Masse auswirken können.

**Patentansprüche**

1. Antriebseinrichtung für einen insbesondere zur Aufnahme eines Greifwerkzeuges eines Roboters geeigneten Abtriebsflansch (5), der fest mit einer um eine erste Achse A drehbaren Abtriebswelle (4) verbunden ist, die in einem Trägerkopf (1) gelagert ist, der um eine zweite zur ersten Achse A geneigte Achse B drehbar ist und der wiederum an einer bei Drehung der Abtriebswelle (4) und/oder des Trägerkopfes (1) ortsfest verbleibenden Haltevorrichtung (2) angelenkt ist, an der für die Erzeugung der Drehbewegung um jede der beiden Achsen A und B zwei getrennt steuerbare Antriebsmotoren (10, 21; 14) fest montiert sind, von denen aus die erforderlichen Antriebskräfte über ausschliesslich in sich starre Kraftübertragungsmittel auf die Abtriebswelle (4) in Achse A bzw. den Trägerkopf in Achse B übertragbar sind, dadurch gekennzeichnet, dass die fest mit dem Abtriebsflansch (5) verbundene Abtriebswelle (4) mit einem gegenüber der Abtriebswelle (4) unbeweglichen Ritzel (6) versehen ist, das von einer durch den einen Antriebsmotor (10, 21) längsverschiebbaren innerhalb des Trägerkopfes (1) verdrehfrei gelagerten Zahnstange (7) antreibbar ist.

2. Antriebseinrichtung nach Anspruch 1, dadurch gekennzeichnet, dass die Zahnstange (7) in Richtung der Achse B verschiebbar ist.

3. Antriebseinrichtung nach Anspruch 1 oder 2, dadurch gekennzeichnet, dass die Grösse des Spiels zwischen den Zahnflanken des Ritzels (6) und denjenigen der Zahnstange (7) durch ein in dem Trägerkopf (1) gelagertes an der dem Ritzel (6) abgewandten Seite der Zahnstange (7) angreifendes Justierlager (12) einstellbar ist, das in einer durch die Achse A senkrecht zur Achse B aufgespannten Ebene senkrecht zur Achse A verschiebbar ist.

4. Antriebseinrichtung nach einem der vorhergehenden Ansprüche, dadurch gekennzeichnet, dass an die Zahnstange (7) ein in Richtung der Achse B verschiebbarer Stössel (8) drehbar angelenkt ist.

5. Antriebseinrichtung nach Anspruch 1 bis 3, dadurch gekennzeichnet, dass die Zahnstange (7) an einen Kugelrollspindelantrieb (18, 22, 23) angelenkt ist (Fig. 4).

6. Antriebseinrichtung nach Anspruch 5, dadurch gekennzeichnet, dass die Drehspindel (18) des Kugelrollspindelantriebs in der Achse B gelagert und von einer ersten Spindelmutter (22) umschlossen ist, die fest mit der Zahnstange (7) verbunden ist.

7. Antriebseinrichtung nach Anspruch 6, dadurch gekennzeichnet, dass an der Drehspindel (18) eine zweite Spindelmutter (23) angreift, die über eine in Richtung der Achse B wirkende Feder (24) kraftschlüssig mit der ersten Spindelmutter (22) bzw. der Zahnstange (7) verbunden ist.

8. Antriebseinrichtung nach einem der vorhergehenden Ansprüche, dadurch gekennzeichnet, dass der Trägerkopf (1) einen die Achse B konzentrisch umgreifenden ersten Ringabschnitt (Rotor 27) aufweist, der in einem oder um einen zweiten Ringabschnitt (Stator 26) einer den Trägerkopf (1) aufnehmenden Haltevorrichtung (2) so angeordnet ist, dass über Schleifkontakte elektrischer Strom oder durch fluchtende im Ringspalt zwischen den beiden Ringabschnitten gedichtete Steuerkanäle flüssige oder gasförmige Medienströme übertragbar sind.

9. Antriebseinrichtung nach einem der vorhergehenden Ansprüche, dadurch gekennzeichnet, dass der Trägerkopf (1) einen die Achse A konzentrisch umgreifenden ersten Ringabschnitt (Stator 29) aufweist, der um einen zweiten fest mit der Abtriebswelle (4) verbundenen Ringabschnitt (Rotor 30) so angeordnet ist, dass über Schleifkontakte elektrischer Strom oder durch fluchtende im Ringspalt zwischen den beiden Ringabschnitten gedichtete Steuerkanäle flüssige oder gasförmige Medien durch die Abtriebswelle (4) hindurch zum Abtriebsflansch (5) übertragbar sind.

10. Antriebseinrichtung nach einem der vorhergehenden Ansprüche, dadurch gekennzeichnet, dass die Zahnstange (7) zur Lagerung in dem Trägerkopf (1) ausserhalb ihrer die Zahnflanken aufweisender Oberfläche zwei parallel zur Achse der Zahnstange (7) verlaufende ebene Laufbahnen besitzt, deren jeweilige Schnittlinie mit einer senkrecht zur Zahnstangenachse ausgerichteten Ebenen auf je einem Schenkel eines in dieser Ebene ausgerichteten gleichschenkligen Dreiecks liegt, in dessen Basis die Achse A des in der Zahnstange (7) kämmenden Ritzels (6) liegt und dass an jede der beiden Laufbahnen im Bereich ihrer jeweiligen Schnittlinie mit jener Ebene ein in dem Trägerkopf abgestütztes Wälzlager (33) mit einer in dieser Ebene liegenden Lagerachse angreift (Fig. 9).

11. Antriebseinrichtung nach Anspruch 10, dadurch gekennzeichnet, dass die an die Laufbahnen der Zahnstange (7) angreifenden Flächen der Wälzlager (33) parallel in Richtung auf die in Anspruch 10 definierten Dreiecks-Schenkel verschiebbar sind.

12. Antriebseinrichtung nach Anspruch 11, bei der die Lagerung der Zahnstange (7) an dem in ihr kämmenden Ritzel (6) gekennzeichnet ist durch die Merkmale:
(a) der Innenring jedes Wälzlagers (33) ist an einem an dem Gehäuse des Trägerkopfes (1) angreifenden Lagerzapfen (35) gelagert,
(b) die Umfangsfläche des Aussenringes jedes Wälzlagers (33) liegt auf der Mantelfläche eines Kegelstumpfes, in dessen Achse der diese Achse jeweils konzentrisch umgreifende zugehörige Lagerzapfen (35) verschiebbar ist.

13. Antriebseinrichtung nach Anspruch 12, dadurch gekennzeichnet, dass die Achsen der Lagerzapfen (35) parallel zur Achse A des Ritzels (6) verlaufen.

14. Antriebseinrichtung nach Anspruch 13, dadurch gekennzeichnet, dass jeder Lagerzapfen (35) Teil eines gleichachsigen Gewindebolzens ist, der jeweils in einer Gewindebohrung des Trägerkopf (1)-Gehäuses von ausserhalb des Gehäuses verstellbar gelagert ist.

15. Antriebseinrichtung nach Anspruch 14, dadurch gekennzeichnet, dass jeder Gewindebolzen über einen mit ihm integrierten Mitnehmer verdrehbar ist.

16. Antriebseinrichtung nach Anspruch 15, dadurch gekennzeichnet, dass jeder Gewindebolzen gegenüber ungewollter Verdrehung arretierbar ist.

17. Antriebseinrichtung nach einem der vorhergehenden Ansprüche mit Ausnahme der Ansprüche 5-7 sowie der hierauf rückbezogenen Ansprüche, dadurch gekennzeichnet, dass der Stössel (8) in einer mindestens über den axialen Verstellweg der Zahnstange (9) reichenden Teillänge als Gewindespindel ausgebildet ist und in einer in der Haltevorrichtung (2) in Richtung der Achse B fixierten um diese Achse antreibbaren Spindelmutter (37) gelagert und über an an ihm angeformte axial verlaufende Führungsbahnen angreifende in der Haltevorrichtung (2) gelagerte Führungsrollen (38) gegen Verdrehen gesichert ist (Fig. 6, 7).

18. Antriebseinrichtung nach Anspruch 17, dadurch gekennzeichnet, dass der Stössel (8) an seinem der Zahnstange (7) abgewandten Endbereich als Gewindespindel ausgebildet ist.

19. Antriebseinrichtung nach einem der vorhergehenden Ansprüche, gekennzeichnet durch ein Kraftübertragungsmittel mit den folgenden Merkmalen:
(a) innerhalb der Haltevorrichtung (2) ist längs der Achse B über einen sich von der Spindelmutter (37) in Richtung der Zahnstange (7) erstreckenden ersten Bereich eine den Stössel (8) umfassende an ihrem der Spindelmutter (37) zugewandten ersten Ende antreibbare Hohlwelle (39) gelagert,
(b) an dem zweiten Ende der Hohlwelle (39) sitzt ein Stirnzahnrad (40), das in ein erstes Gegen-Stirnrad (41) eingreift,
(c) das erste Gegen-Stirnrad (41) sitzt an einem ersten Ende einer parallel zur Achse B gelagerten Zwischenwelle (42),
(d) ein an dem zweiten Ende der Zwischenwelle (42) sitzendes Stirnritzel (43) greift in eine an dem Trägerkopf (1) fest vorgesehene Stirnzahn-Kreisbahn (Stirnrad 44) ein (Fig. 6).

20. Antriebseinrichtung nach Anspruch 19, gekennzeichnet durch eine Lagerung der Zwischenwelle (42) nach folgenden Merkmalen:
(a) im Bereich beider Enden der Zwischenwelle (42) sind die Zwischenwelle in der Haltevorrichtung (2) abstützende Lager (45) vorgesehen,
(b) die gegenüber der Zwischenwelle (42) ortsfest in der Haltevorrichtung (2) verbleibenden Lager (45)-Teile sind jeweils ein Aussenring (46) mit zylindrischen exzentrisch gegeneinander versetzten Innen- und Aussenmantelflächen,
(c) jeder Aussenring (46) ist an seiner jeweiligen Aussenmantelfläche verdreh- und fixierbar (Fig. 11, 12).

21. Antriebseinrichtung nach Anspruch 20, dadurch gekennzeichnet, dass auf dem Umfang der Aussenringe (46) ein Anschlag (47) vorgesehen ist, an den ein sich in der Haltevorrichtung (2) abstützendes Verstellglied (60) angreift (Fig. 12).

22. Antriebseinrichtung nach Anspruch 21, dadurch gekennzeichnet, dass das Verstellglied (60) eine an dem Anschlag (47) anliegende Schraube ist.

23. Antriebseinrichtung nach einem der Ansprüche 19 bis 22, dadurch gekennzeichnet, dass die Spindelmutter (37) und die Hohlwelle (39), die beide um die gleiche Achse B rotieren, mit sich direkt gegenüber liegenden Kegelzahnrädern verbunden sind, über die sie mit in der Haltevorrichtung (2) senkrecht zur Achse B auf Antriebswellen (49, 50) zweier Elektromotoren gelagerte Kegelzahnräder antreibbar sind.

24. Antriebseinrichtung nach einem der vorhergehenden Ansprüche mit Ausnahme der Ansprüche 5 bis 7 sowie hierauf rückbezogenen Ansprüchen, dadurch gekennzeichnet, dass an dem Trägerkopf (1) getrennte jeweils um eine der Achse A oder B konzentrisch rotierbare Positionsgeberteile (51, 52) vorgesehen sind, die fest an der Haltevorrichtung (2) angebrachte Kontaktgeberteile (53, 54) berühren können (Fig. 6, 10).

25. Antriebseinrichtung nach Anspruch 24, dadurch gekennzeichnet, dass die Positionsgeberteile (51, 52) in Führungsnuten drehbare Ringe (55) mit jeweils einer in diesen Ring eingreifenden und diesen in den Führungsnuten in beliebigen Umfangsstellungen arretierbaren Schraube (48) sind, von denen allein diese Schraube die Kontaktgeberteile (53, 54) direkt kontaktiert (Fig. 10).

26. Antriebseinrichtung nach Anspruch 25, dadurch gekennzeichnet, dass eine Führungsnut gebildet ist von zwei aneinanderliegenden auf eine zylindrische Mantelfläche aufschiebbaren Doppel-T-Profilringen (56), deren radial innen liegende T-Querbalken axial länger als die radial aussen liegenden sind.

27. Antriebseinrichtung nach Anspruch 26, dadurch gekennzeichnet, dass auf jedem der Positionsgeberteile (51 bzw. 52) jeweils mehrere Führungsnuten mit je einem Ring (55) nebeneinander liegen.

## Claims

1. A drive device for an output flange (5) suitable particularly for holding a gripping tool of a robot and connected rigidly to an output shaft (4) rotatable about a first axis A and mounted in a carrier head (1) which is rotatable about a second axis B inclined in relation to the first axis A, the said carrier head (1) being in turn articulated on a supporting device (2) which remains stationary during rotation of the output shaft (4) and/or of the carrier head (1) and on which there are rigidly mounted two separately controllable driving motors (10, 21; 14) for creating the rotary movement about each of the two axes A and B and from which it is possible to transmit the necessary driving forces via solely in themselves rigid force transmitting means to the output shaft (4) in axis A or to the carrier head in axis B, characterised in that the output shaft (4) rigidly connected to the output flange (5) is provided with, immovable in relation to the output shaft (4), a pinion (6) which is adapted to be driven by a rack (7) which is freely rotatably mounted inside the carrier head (1) and adapted to be longitudinally displaced by a driving motor (10, 21).

2. A drive device according to Claim 1, characterised in that the rack (7) is displaceable in the direction of the axis B.

3. A drive device according to Claim 1 or 2, characterised in that the magnitude of the clearance between the tooth flanks of the pinion (6) and those of the rack (7) is adjustable by an adjusting bearing (12) mounted in the carrier head (1) on the side remote from the pinion (6), the adjusting bearing (12) being displaceable at a right angle to the axis A in a plane through the axis A at a right angle to the axis B.

4. A drive device according to one of the preceding Claims, characterised in that a push rod (8) displaceable in the direction of the axis B is articulated for rotation on the rack (7).

5. A drive device according to Claims 1 to 3, characterised in that the rack (7) is articulated on a ball caster spindle drive (18, 22, 23) (Fig. 4).

6. A drive device according to Claim 5, characterised in that the rotary spindle (18) of the ball caster spindle drive is mounted in the axis B and is enclosed by a first spindle nut (22) which is rigidly connected to the rack (7).

7. A drive device according to Claim 6, characterised in that the rotary spindle (18) is engaged by a second spindle nut (23) which, via a spring (24) acting in the direction of the axis B, is operatively connected to the first spindle nut (22) or rack (7).

8. A drive device according to one of the preceding Claims, characterised in that the carrier head (1) comprises, engaging concentrically around the axis B, a first ring portion (rotor 27) which is so disposed in one or about one second ring portion (stator 26) of a supporting device (2) which holds the carrier head (1) that electric current can be transmitted via wiping contacts or flows of liquid or gaseous media can be transmitted via aligned control passages sealed in the annular gap between the two ring portions.

9. A drive device according to one of the preceding Claims, characterised in that the carrier head (1) has, engaging concentrically around the axis A, a first ring portion (stator 29) which is so disposed about a second ring portion (rotor 30) which is rigidly connected to the output shaft (4) that electric current can be transmitted via wiping contacts or liquid or gaseous media can be transmitted via aligned control passages sealed in the annular gap between the two ring portions and through the output shaft (4) to the output flange (5).

10. A drive device according to one of the preceding Claims, characterised in that for mounting in the carrier head (1), the rack (7) comprises not only its surface which includes the tooth flanks but also two plane tracks which extend parallel with the axis of the rack (7) and of which the line of intersection with a plane orientated at a right angle to the rack axis lies on in each case one arm of an equilateral triangle orientated in this plane and in the base of which the axis A of the pinion (6) meshing with the rack (7) lies and in that on each of the two tracks, in the region of its respective line of intersection with that plane there is supported in the carrier head a rolling-type bearing (33) having a bearing axis located in this plane (Fig. 9).

11. A drive device according to Claim 10, characterised in that the surfaces of the rolling-type bearings (33) which engage the tracks of the rack (7) are displaceable parallel in the direction of the arms of the triangle defined in Claim 10.

12. A drive device according to Claim 11 in which the mounting of the rack (7) on the pinion (6) meshing with it is characterised by the features:

(a) the inner ring of each rolling-type bearing (33) is mounted on a bearing journal (35) engaging the housing of the carrier head (1),

(b) the peripheral surface of the outer ring of each rolling-type bearing (33) lies on the outer shell of a truncated cone in the axis of which the associated bearing journal (35) which engages concentrically around this axis is displaceable.

13. A drive device according to Claim 12, characterised in that the axes of the bearing journals (35) extend parallel with the axis A of the pinion (6).

14. A drive device according to Claim 13, characterised in that each bearing journal (35) is a part of an equiaxial threaded bolt which is mounted in each case in a threaded bore in the housing of the carrier head (1) in such a way as to be adjustable from outside the housing.

15. A drive device according to Claim 14, characterised in that each threaded bolt is rotatable via an entraining means which is integral with it.

16. A drive device according to Claim 15, characterised in that each threaded bolt can be locked against unintended rotation.

17. A drive device according to one of the preceding Claims with the exception of Claims 5 to 7 and also the Claims related to these latter, characterised in that the push rod (8) has at least a part of its length which extends over the path of axial displacement of the rack (9) constructed as a threaded spindle and is mounted in a spindle nut (37) in the supporting device (2) which is fixed and is adapted to be driven in the direction of and about the axis B, being secured against rotation by guided rollers (38) mounted in the supporting device (2) and engaging guide ways integrally formed and extending axially on it (Figs. 6, 7).

18. A drive device according to Claim 17, characterised in that the push rod (8) is constructed as a threaded spindle in its end portion which is remote from the rack (7).

19. A drive device according to one of the preceding Claims, characterised by a force transmitting means having the following features:
(a) a hollow shaft (39) is mounted inside the supporting device (2) and is adapted to be driven lengthwise of the axis B through a first portion extending from the spindle nut (37) in the direction of the rack (7) and enclosing the push rod (8) at its first end which is towards the spindle nut (37),
(b) seated on the second end of the hollow shaft (39) is a spur gear wheel (40) which engages a first matching spur gear (41),
(c) the first matching spur gear (41) is seated on a first end of an intermediate shaft (42) mounted parallel with the axis B,
(d) a spur-cut pinion (43) mounted on the second end of the intermediate shaft (42) engages a spur-cut circular toothed ring (spur gear 44) provided rigidly on the carrier head (1) (Fig. 6).

20. A drive device according to Claim 19, characterised by a mounting of the intermediate shaft (42) in accordance with the following features:
(a) in the region of both ends of the intermediate shaft (42) there are provided bearings (45) which support the intermediate shaft in the supporting device (2),
(b) the parts of the bearing (45) which in comparison with the intermediate shaft (42) remain stationary in the supporting device (2) are an external ring (46) having cylindrical eccentrically offset internal and external surfaces,
(c) each external ring (46) is adapted to be rotatably fixed on its respective outer cylindrical surface (Figs. 11, 12).

21. A drive device according to Claim 20, characterised in that there is provided on the periphery of the outer rings (46) an abutment (47) engaged by an adjusting member (60) which is braced in the supporting device (2) (Fig. 12).

22. A drive device according to Claim 21, characterised in that the adjusting member (60) is a screw bearing on the abutment (47).

23. A drive device according to one of Claims 19 to 22, characterised in that the spindle nut (37) and the hollow shaft (39), both of which rotate about the same axis B are connected to each other directly by oppositely disposed tapered gear wheels by which they can be driven with tapered gear wheels mounted in the supporting device (2) at a right angle to the axis B on drive shafts (49, 50) of two electric motors.

24. A drive device according to one of the preceding Claims, with the exception of Claims 5 to 7 and Claims related back to these latter, characterised in that on the carrier head (1) there are separate position transmitter parts (51, 52) adapted to rotate concentrically about one of the axes A or B and which are able to touch contact transmitter parts (53, 54) rigid on the supporting device (2) (Figs. 6, 10).

25. A drive device according to Claim 24, characterised in that the position transmitter parts (51, 52) are rings (55) rotatable in guide slots with in each case a screw (48) engaging this ring and locking it in any desired peripheral position in the guide grooves, only this screw directly contacting the contact transmitter parts (53, 54) (Fig. 10).

26. A drive device according to Claim 25, characterised in that a guide groove is formed by two abutting double-T-profile rings (56) which are adapted to be pushed onto a cylindrical surface and of which the radially inner cross bar of the T is axially longer than the radially outer cross member.

27. A drive device according to Claim 26, characterised in that in each case a plurality of guide grooves with in each case one ring (55) are disposed beside one another on each of the position transmitter parts (51, 52).

## Revendications

1. Dispositif d'entraînement pour une bride (5) de sortie, appropriée en particulier à recevoir un outil de préhension de robot, qui est fixée sur un arbre (4) de sortie susceptible de tourner sur un premier axe A monté dans une tête (1) de support susceptible de tourner sur un deuxième axe B incliné par rapport à l'axe A et qui, à son tour, est articulée sur un dispositif (2) de support qui reste fixe lors de la rotation de l'arbre (4) de sortie et/ou de la tête (1) de support, sur lequel sont fixés deux moteurs (10, 21 ; 14) de commande susceptibles d'être commandés séparément pour créer le mouvement de rotation sur chacun des deux axes A et B, à partir desquels les forces d'entraînement nécessaires peuvent être transmises à l'arbre (4) de sortie dans l'axe A ou à la tête de support dans l'axe B exclusivement par l'intermédiaire de moyens de transmission de force, rigides en eux-mêmes, dispositif caractérisé en ce que l'arbre (4) de sortie fixé sur la bride (5) de sortie est muni d'un pignon (6), non mobile par rapport à l'arbre (4) de sortie et qui peut être entraîné par une crémaillère (7) montée de façon à ne pas tourner et à pouvoir se déplacer longitudinalement à l'intérieur de la tête (1) de support sous l'effet de l'un des moteurs (10, 21) de commande.

2. Dispositif d'entraînement selon la revendication 1, caractérisé en ce que la crémaillère (7) peut se déplacer dans la direction de l'axe B.

3. Dispositif d'entraînement selon la revendication 1 ou 2, caractérisé en ce que l'amplitude du jeu entre les flancs de dents du pignon (6) et ceux de la crémaillère (7) peut être réglée grâce à un palier (12) de réglage fin installé dans la tête (1) de support qui porte du côté de la crémaillère (7) opposé au pignon (6) et qui peut être déplacé perpendiculairement à l'axe A dans un plan défini par l'axe A perpendiculairement à l'axe B.

4. Dispositif d'entraînement selon l'une des revendications précédentes, caractérisé en ce qu'un coulisseau (8), susceptible de se déplacer dans la direction de l'axe B, est monté de façon à pouvoir tourner sur la crémaillère (7).

5. Dispositif d'entraînement selon l'une des revendications 1 à 3, caractérisé en ce que la crémaillère (7) est montée avec un entraînement à broche filetée (18, 22, 23) contenant des billes (figure 4).

6. Dispositif d'entraînement selon la revendication 5, caractérisé en ce que la broche filetée (18) tournante de l'entraînement à broche filetée contenant des billes est montée sur l'axe B et est entourée par un premier écrou (22) de broche filetée qui est fixé sur la crémaillère (7).

7. Dispositif d'entraînement selon la revendication 6, caractérisé en ce qu'un deuxième écrou (23) de broche fileté est en prise sur la broche filetée (18) tournante, cet écrou étant relié de façon mécanique au premier écrou fileté (22) ou à la crémaillère (7) par l'intermédiaire d'un ressort (24) agissant dans l'axe B.

8. Dispositif d'entraînement selon l'une des revendications précédentes, caractérisé en ce que la tête (1) de support présente un premier tronçon annulaire (rotor 27) entourant concentriquement l'axe B, et qui est disposé dans ou autour d'un deuxième tronçon annulaire (stator 26) d'un dispositif (2) de support qui reçoit la tête (1) de support, de façon telle que l'on puisse transmettre du courant électrique par l'intermédiaire de contacts à frotteurs ou des flux de fluides liquides ou gazeux par des canaux de commande, étanches, affleurant dans la fente annulaire située entre les deux tronçons annulaires.

9. Dispositif d'entraînement selon l'une des revendications précédentes, caractérisé en ce que la tête (1) de support présente un premier tronçon annulaire (stator 29) entourant concentriquement l'axe A et qui est disposé autour d'un deuxième tronçon annulaire (rotor 30) fixé à l'arbre (4) de sortie de façon telle qu'il est possible de transmettre le courant électrique par des contacts à frotteur ou les fluides liquides ou gazeux au moyen de canaux de commande étanches affleurant dans la fente annulaire entre les deux tronçons annulaires, en passant par l'arbre (4) de sortie, à la bride (5) de sortie.

10. Dispositif d'entraînement selon l'une des revendications précédentes, caractérisé en ce que la crémaillère (7) comporte, en vue de son montage dans la tête (1) de support, en dehors de sa surface extérieure présentant les flancs de dents, deux chemins de déplacement plans qui s'étendent parallèlement à l'axe de la crémaillère (7), les lignes de coupe de ces chemins par un plan perpendiculaire à l'axe de la crémaillère étant situées chacune sur un des côtés égaux d'un triangle isocèle situé dans ce plan, dans la base duquel se situe l'axe A du pignon (6) en prise dans la crémaillère (7) et en ce que, sur chacun des chemins de roulement dans la zone de leur ligne de coupe considérée avec ce plan, porte un roulement (33) soutenu par la tête de support comportant un axe de roulement situé dans ce plan (figure 9).

11. Dispositif d'entraînement selon la revendication 10, caractérisé en ce que les surfaces des roulements (33), qui portent sur les pistes de roulement de la crémaillère (7), peuvent être déplacées parallèlement, dans la direction des côtés de triangle définis à la revendication 10.

12. Dispositif d'entraînement selon la revendication 11, dans lequel le montage sur palier de la crémaillère (7) contre le pignon (6) qui se met en prise avec elle, se caractérise par les caractéristiques suivantes:
a) la bague intérieure de chaque roulement (33) est montée sur un axe (35) de palier implanté dans le corps de la tête (1) de support,
b) la surface périphérique de la bague extérieure de chaque roulement (33) est située sur la surface d'enveloppe d'un tronc de cône dans l'axe duquel peut être déplacé l'axe de palier (35) correspondant entourant concentriquement cet axe dans chaque cas.

13. Dispositif d'entraînement selon la revendication 12, caractérisé en ce que les axes géométriques des axes ou arbres (35) de palier s'étendent parallèlement à l'axe géométrique A du pignon (6).

14. Dispositif d'entraînement selon la revendication 13, caractérisé en ce que chaque axe ou arbre (35) de palier constitue une partie d'une tige filetée ayant le même axe géométrique et qui est implantée dans un alésage fileté du corps de la tête (1) de support de façon à pouvoir être réglée de l'extérieur. '

15. Dispositif d'entraînement selon la revendication 14, caractérisé en ce que chaque tige filetée peut être tournée par l'intermédiaire d'un élément d'entraînement intégré à cette tige.

16. Dispositif d'entraînement selon la revendication 15, caractérisé en ce que chaque tige filetée peut être bloquée à l'encontre d'une rotation non souhaitée.

17. Dispositif d'entraînement selon l'une des revendications précédentes, à l'exception des revendications 5 à 7, ainsi que des revendications qui s'y rattachent, caractérisé en ce que le coulisseau (8) est aménagé en broche filetée, sur une partie de sa longueur qui s'étend au moins sur la distance de réglage de la crémaillère (9), et est logé dans un écrou (37) de broche filetée, fixé dans la direction de l'axe B dans le dispositif (2) de support susceptible d'être entraîné autour de cet axe, et en ce que des rouleaux (38) de guidage, portant sur des chemins de guidage s'étendant axialement sur le coulisseau et qui sont montés sur palier dans le dispositif (2) de support, empêchent le coulisseau de tourner (figures 6, 7).

18. Dispositif d'entraînement selon la revendication 17, caractérisé en ce que le coulisseau (8) a une conformation de broche filetée dans sa zone d'extrémité opposée à la crémaillère (7).

19. Dispositif d'entraînement selon une des revendications précédentes, caractérisé en ce qu'il comporte un moyen de transmission de force présentant les particularités suivantes:

a) à l'intérieur du dispositif (2) de support est monté, le long de l'axe B, sur une première zone s'étendant à partir de l'écrou (37) de broche filetée dans la direction de la crémaillère (7), un arbre creux (39) entourant le coulisseau (8) susceptible d'être entraîné à sa première extrémité tournée vers l'écrou (37) de broche filetée,

b) à l'autre extrémité de l'arbre creux (39) se trouve installée une roue dentée (40) droite qui engrène sur une première roue dentée (41) complémentaire,

c) la première roue dentée (41) complémentaire est installée à une première extrémité d'un arbre intermédiaire (42) monté sur palier parallèlement à l'axe B,

d) un pignon (43) à denture droite, installé à la seconde extrémité de l'arbre intermédiaire (42), engrène sur une orbite circulaire à denture droite (roue dentée (44) à denture droite), prévue de façon fixe sur la tête (1) de support (figure 6).

20. Dispositif d'entraînement selon la revendication 19, caractérisé en ce qu'un montage sur palier de l'arbre intermédiaire (42) présente les particularités suivantes:

a) dans la zone des deux extrémités de l'arbre intermédiaire (42) sont prévus les paliers (45) qui soutiennent l'arbre intermédiaire dans le dispositif (2) de support,

b) les pièces de palier (45), qui restent fixes dans le dispositif (2) de support par rapport à l'arbre intermédiaire (42), sont dans chaque cas une bague extérieure (46) comportant des surfaces cylindriques extérieures et intérieures décalées excentriquement l'une par rapport à l'autre,

c) chaque bague extérieure (46) peut tourner et être bloquée par sa surface extérieure (figures 11, 12).

21. Dispositif d'entraînement selon la revendication 20, caractérisé en ce que, sur la périphérie des bagues extérieures (46), est prévue une butée (47) sur laquelle porte un organe (60) de réglage, qui est lui-même porté par le dispositif de support (2).

22. Dispositif d'entraînement selon la revendication 21, caractérisé en ce que l'organe (60) de réglage est une vis, qui s'appuie sur la butée (47).

23. Dispositif d'entraînement selon une des revendications 19 à 22, caractérisé en ce que l'écrou de broche filetée (37) et l'arbre creux (39) qui tournent tous les deux sur le même axe B, sont reliés par des roues dentées coniques situées directement en face, par l'intermédiaire desquelles elles peuvent être entraînées par des roues dentées coniques montées dans le dispositif (2) de support perpendiculairement à l'axe B, sur les arbres (49, 50) menants de deux moteurs électriques.

24. Dispositif d'entraînement selon une des revendications précédentes, à l'exception des revendications 5 à 7, ainsi que des revendications qui en dépendent, caractérisé en ce que, sur la tête (1) de support, sont prévues des pièces (51, 52) d'indication de position, séparées et susceptibles de tourner concentriquement à l'axe A ou à l'axe B, qui peuvent venir en contact avec des pièces (53, 54) d'indication de contact, fixées sur le dispositif (2) de support (figures 6, 10).

25. Dispositif d'entraînement selon la revendication 24, caractérisé en ce que les pièces (51, 52) d'indication de position sont des bagues (55) susceptibles de tourner dans des gorges de guidage comportant dans chaque cas une vis (48) en prise dans cette bague et susceptible de bloquer celle-ci dans les gorges de guidage dans des positions périphériques choisies à volonté, vis parmi lesquelles seule une vis est mise en contact directement avec les pièces (53, 54) d'indication de contact (figure 10).

26. Dispositif d'entraînement selon la revendication 25, caractérisé en ce qu'une gorge de guidage est formée par deux bagues (56) profilées en double T disposées l'une à côté de l'autre, susceptibles d'être déplacées sur une surface extérieure cylindrique, et dont les barres transversales de T situées radialement à l'intérieur sont axialement plus longues que celles qui sont situées radialement à l'extérieur.

27. Dispositif d'entraînement selon la revendication 26, caractérisé en ce que sur chacune des pièces (51 ou 52) d'indication de position, sont situées dans chaque cas les unes à côté des autres plusieurs gorges de guidage comportant chacune une bague (55).

FIG.1

FIG.2

FIG.3

FIG.4

FIG.5

FIG. 6

FIG. 7

FIG. 8

FIG. 9

FIG.10

FIG. 11

FIG.12